# EUROPEAN PATENT SPECIFICATION

(11) **EP 4 170 292 B1**
(45) Date of publication and mention of the grant of the patent: **03.04.2024**
(21) Application number: 22199529.3
(22) Date of filing: 04.10.2022
(51) Int. Cl.: G01D 18/00, G01D 5/14, G01D 3/02

(54) **SENSOR DEVICE AND SYSTEM WITH NON-LINEARITY COMPENSATION**
SENSORVORRICHTUNG UND SYSTEM MIT NICHTLINEARITÄTSKOMPENSATION
DISPOSITIF DE CAPTEUR ET SYSTÈME À COMPENSATION DE NON-LINÉARITÉ

(30) Priority: 25.10.2021 EP 21204595
(43) Date of publication of application: 26.04.2023
(73) Proprietor: Melexis Technologies SA, 2022 Bevaix (CH)
(72) Inventor: CLOSE, Gael, 2022 Bevaix (CH); RAMAN, Johan, 9910 Knesselare (BE); ROMBOUTS, Pieter, 9030 Mariakerke (BE); BONIN, Andreas, 01109 Dresden (DE); SACHSE, Eric, 01109 Dresden (DE)
(74) Representative: Jacobs, Lambert

(56) References cited:
- EP-A1- 1 637 898
- EP-A1- 3 517 897
- EP-A1- 3 528 388
- EP-A1- 3 553 952
- WO-A1-2016/200637
- US-A1- 2011 057 709
- US-A1- 2020 116 470

## Description

### Field of the invention

The present invention relates in general to the field of sensor systems and devices, e.g. magnetic sensor systems and devices, e.g. magnetic position sensor systems and devices such as linear or angular position sensor system and devices.

### Background of the invention

Various sensor systems are known in the art. They typically comprise one or more sensor or transducer for measuring a characteristic of a physical quantity (e.g. an electrical current, a temperature, a mechanical pressure, a mechanical force, a mechanical torque, a linear position, an angular position, etc.), and circuitry for converting the measured signal into an electrical signal (e.g. a current or a voltage), and circuitry for processing the electrical signal.

As a few examples, U52020191834(A1) describes a sensor device comprising one or more magnetic sensors for measuring a magnetic field indicative of a magnitude of the current.

EP 3 517 897 A1 discloses a position sensing device with a feedback loop.

WO2015086680(A1) describes a pressure sensor using piezo-resistive sensor elements to measure an electrical resistance indicative of a mechanical pressure exerted upon a membrane. EP3851820(A1) describes a sensor structure for measuring a mechanical torque using magnetic sensors. EP3865825(A1) describes an inductive angular position sensor comprising a plurality of receiver coils for measuring signals indicative of an angular position of a target. EP3650816(A1) describes a linear and angular position sensor system measuring a magnetic field, and determining the position based on a ratio of magnetic field components or a ratio of magnetic field gradients.

In many of these systems, the physical quantity to be measured (e.g. a current, an angular position, a mechanical torque, etc.) is not measured directly, but indirectly, by measuring another signal (e.g. a magnetic field component) which is related to the physical quantity. Ideally, the measured signal is proportional to the physical quantity (i.e. zero offset and a constant scaling factor), but in practice this is often not the case, and the measured signal has a non-linear relationship with the quantity to be measured.

Many variants of sensor systems exist, addressing one or more of the following requirements: using a simple or cheap sensor structure, using a simple or cheap sensor circuit or device, being able to measure over a relatively large range, being able to measure with great accuracy, requiring only simple arithmetic, being able to measure at high speed, being highly robust against positioning errors, being highly robust against an external disturbance field, providing redundancy, being able to detect an error, being able to detect and correct an error, having a good signal-to-noise ratio (SNR), having a good linearity, etc. Often two or more of these requirements conflict with each other, hence a trade-off needs to be made.

There is always room for improvements or alternatives.

### Summary of the invention

It is an object of embodiments of the present invention to provide a sensor circuit for measuring a physical quantity, and for providing an output signal related to that physical quantity.

It is an object of embodiments of the present invention to provide a sensor circuit configured to reduce an error between the output signal and the physical quantity to be measured.

It is an object of embodiments of the present invention to provide a sensor circuit configured for improving a linearity between the output signal and the physical quantity to be measured.

It is an object of particular embodiments of the present invention to provide an integrated semiconductor device comprising such a sensor circuit, e.g. a packaged device comprising a semiconductor substrate implemented in a CMOS process.

It is an object of particular embodiments of the present invention to provide a position sensor circuit, a position sensor device, and a position sensor system having a good or improved linearity.

It is an object of particular embodiments of the present invention to provide an angular position sensor system with an improved linearity for angular speeds spanning at least the range from 1 krpm to 5 krpm electrical, or from 1 krpm to 25 krpm electrical, or from 1 krpm to 100 krpm electrical, or from 1 krpm to 200 krpm.

It is an object of embodiments of the present invention to provide an integrated sensor device, e.g. a packaged device comprising at least one semiconductor die, (also referred to as "chip") capable of measuring a physical quantity (e.g. linear position, angular position, current amplitude, proximity indication, etc.) related to a magnetic field.

It is an object of embodiments of the present invention to provide an integrated sensor device comprising a semiconductor substrate, wherein the physical quantity (e.g. linear position, angular position, current amplitude, proximity indicator, acceleration, radiation intensity, visible light intensity, IR light intensity, pressure, etc.) is measured with improved accuracy, e.g. improved linearity over its measurement range.

It is an object of embodiments of the present invention to provide such a magnetic sensor system or circuit or device that is suitable for use in an industrial, robotic or automotive environment.

These objectives are accomplished by embodiments of the present invention.

According to a first aspect, the present invention provides a sensor circuit as defined by independent claim 1.

The nonlinear function block is preferably chosen so as to reduce or substantially compensate any nonlinearities introduced by the sensor circuit and/or the sensor system.

The physical quantity may be measured directly or indirectly.

The sensor may be any kind of sensor or transducer, e.g. an accelerometer, a magnetic sensor, a MEMs sensor, an infrared (IR) sensor, a frequency sensor.

The characteristic of the physical quantity may be an amplitude or a phase. The at least one signal may be indicative of an input characteristic of the physical quantity, e.g. to a phase or an amplitude of the physical quantity.

The "first signal" may be an estimate of the physical quantity, and may also be referred to as "an uncorrected signal".

This sensor circuit is particularly suitable for capturing a "fast" signal, and perform a "linearity correction even up to high speed. In an embodiment, the signal acquisition circuit is capable of sampling an input signal, and digitizing that signal, and processing that signal at a symbol rate from about 100 kHz to about 10 MHz, or from about 200 kHz to about 5 MHz, or from about 250 kHz to about 4 MHz, or from about 500 kHz to about 2.0 MHz.

The processing circuit, when implemented in the digital domain, typically operates at a clock frequency which is a factor of about 2 to 64 times higher than the symbol rate, or a factor 8 to 32 times higher, for example about 10 times higher, or about 16 times higher, or about 20 times higher.

In particular embodiments, the processing circuit may operate at a frequency of about 10 to 30 MHz.

In an embodiment, the sensor circuit is a current sensor circuit for measuring a current, e.g. a current flowing through a busbar, and the current sensor circuit comprises at least one magnetic sensor elements (e.g. at least one Hall element, e.g. a horizontal Hall element or a vertical Hall element or an MR element) configured for measuring a magnetic field generated by said current when flowing through said busbar. This sensor circuit is preferably implemented in a single semiconductor substrate, e.g. a silicon substrate. This substrate may be packaged in a moulded package or a ceramic package, also known as a "chip", and may have a plurality of pins extending from said package. The processing circuit may be aimed at correcting a nonlinearity of the conversion from the electrical current into a magnetic field, or a nonlinearity of the conversion of the magnetic field value into an amplitude, or both. Nonlinearities may e.g. be introduced by magnetic saturation (e.g. of an integrated magnetic concentrator), by amplifier offset or gain offset, by skin effect, etc.

In an embodiment, the sensor circuit is a position sensor circuit for measuring a position, e.g. a linear position or an angular position of a magnetic source (e.g. a permanent magnet) relative to a sensor device or vice versa. The position sensor circuit may comprise a plurality of magnetic sensor elements (e.g. at least one Hall element, e.g. a horizontal Hall element or a vertical Hall element or an MR element) configured for measuring a magnetic field generated by said magnetic source. The plurality of magnetic sensor elements may be configured for measuring two orthogonal magnetic field components or two orthogonal magnetic field gradients. Thus the first sensor signal may be substantially 90° phase shifted relative to the second sensor signal. The processing circuit may be further configured for calculating an angle (or a phase) using a goniometric function (e.g. an arctangent function) of these signals, and to convert said angle into a position. This sensor circuit is preferably implemented in a single semiconductor substrate, e.g. a silicon substrate. This substrate may be packaged in a moulded package or a ceramic package, also known as a "chip", and may have a plurality of pins extending from said package. The processing circuit may be aimed at correcting a nonlinearity of the conversion from the mechanical position into a magnetic field, or a nonlinearity of the conversion of the magnetic field values into an angle, or both. Nonlinearities may e.g. be introduced by one or more of: magnetic saturation (e.g. of an integrated magnetic concentrator), by non-ideal magnetization of the magnet, by linear or axial offset or mechanical tilt of the magnet relative to the sensor device, by amplifier offset or gain offset, etc.

In an embodiment, the sensor circuit is an inductive position sensor circuit for measuring a position (e.g. a linear position or an angular position) of a target (e.g. a metallic target or a conductive target) which is movable relative to a printed circuit board. The printed circuit board may comprise a plurality of coils including at least one transmitter coils and at least two receiver coils. The at least two receiver coils may be referred to as magnetic sensors or magnetic sensor elements. In an embodiment the printed circuit board comprises three receiver coils configured for providing three modulated signals, and the processing circuit may be configured for demodulating these three signals. The three signals may be 120° phase shifted. The processing circuit may be further configured for transforming these three signals into two orthogonal signals, using a transformation (e.g. using a Clarke transformation). Thus the first sensor signal may be substantially 90° phase shifted relative to the second sensor signal. The processing circuit may be further configured for calculating an angle (or a phase) using a goniometric function (e.g. an arctangent function) of these signals, and to convert said angle into a position. The processing circuit and correction circuit is preferably implemented in a single semiconductor substrate, e.g. a silicon substrate. This substrate may be packaged in a moulded package or a ceramic package, also known as a "chip", and may have a plurality of pins extending from said package. The processing circuit may be aimed at correcting a nonlinearity of the conversion from the mechanical position into a magnetic field, or a nonlinearity of the conversion of the magnetic field values into an angle, or both. Nonlinearities may e.g. be introduced by one or more of: magnetic saturation (e.g. of an integrated magnetic concentrator), by non-idealities of the layout of the coils, by offset or mechanical tilt of the target relative to the coils, by non-idealities of the demodulation, by amplifier offset or gain offset, etc.

The physical quantity to be measured may be selected from the group consisting of: an angular position, a linear position, an electrical current, an acceleration, a pressure, a force, a torque, a frequency, a temperature, a radiation intensity, a light intensity, an amplitude of a light waveform.

The at least one sensor or transducer may measure the physical quantity itself, or may measure a second quantity related to the physical quantity, for example: the physical quantity may be an angular position of a magnet and the second quantity may be a magnetic field value.

In an embodiment, the corrected output value has an improved linearity with respect to the physical quantity. This can be expressed for example mathematically by stating that "the linear regression coefficient of the corrected output signal versus the magnitude of the physical quantity to be measured, over the measurement range" is improved, i.e. is a value closer to 1.0.

The frequency dependent filter may be a noise reduction filter. This filter may have a low-pass characteristic, or a band-pass characteristic. The noise to be reduced may be thermal noise. The noise to be reduced may have a frequency higher than predefined frequency. In other words, the noise reduction filter may have a transfer function that attenuates above a predefined frequency.

In certain embodiments, the filter may comprise a plurality of different frequency dependent filters, one of which is selected, e.g. dependent on a rate of change of the signal.

The at least one signal may be an electrical signal, e.g. a voltage signal or a current signal, or an optical signal.

The nonlinear function block may be a non-linear scaler.

In an embodiment, the nonlinear function block is memoryless, meaning that it does not contain memory elements such as a flip-flop or a digital register.

In an embodiment, the nonlinear function block contains at least one memory elements such as a flip-flop or a digital register.

In an embodiment, the signal acquisition circuit comprises at least two sensors.

In an embodiment, the signal acquisition circuit is configured to provide at least two analogue signals, and the processing circuits is implemented at least partly in the analogue domain.

In an embodiment, the signal acquisition circuit is configured to provide at least two digital signals, and the processing circuits is implemented completely in the digital domain. Such an embodiment offers the advantage that a major portion of the circuit is implemented in the digital domain, which typically provides less manufacturing tolerances, is easier to test, and typically provides improved accuracy.

In an embodiment, the combiner is a digital combiner, e.g. a digital linear combiner, e.g. a summation block or a subtraction block, or a multiplier, or a complex multiplier (i.e. configured to perform a multiplication of two complex signals, each having a real and an imaginary part), or a complex multiplier of a first signal with the complex conjugate of a second signal.

According to the invention, the non-linear function is defined by a plurality of parameters determined during a calibration procedure.

In an embodiment, the piecewise-linear approximation function passes through a number of points (e.g. from 4 to 32 points), which are determined during a calibration procedure.

It is a major difference with prior art solutions that the non-linear function is incorporated in a block in the feedback-path, rather than in a forward path.

In an embodiment, the physical quantity has an input phase (e.g. θi), and the output signal (e.g. θcorr) is a phase signal indicative of the input phase (e.g. θi); and the signal acquisition circuit comprises a plurality of sensors configured to provide a plurality of input signals (e.g. v1, v2), each being a function (e.g. a sinusoidal function) of said input phase (e.g. θi); and the first sub-circuit further comprises a phase generator configured to provide an estimate (e.g. θcalc; θest) of said input phase (e.g. θi); and wherein the processing circuit is configured to provide the output phase (e.g. θcorr) so as to have an improved accuracy (e.g. improved linearity) with respect to the input phase (e.g. θi).

The "phase generator" may be a "phase calculator", or a "phase estimator", depending on the implementation.

This sensor circuit is particular suited for measuring a physical quantity which is periodic, and where the information to be determined by the sensor device is encoded in the phase of the signal.

In an embodiment, there are at least two sensors, configured for providing two input signals which are substantially 90° phase shifted.

In an embodiment, there are at least three sensors, configured for providing three input signals which are substantially 120° phase shifted.

The sensor circuit may be further configured for converting the output phase value (θo) into a position, e.g. to a linear to an angular position, in known manners.

In an embodiment, the signal acquisition circuit comprises at least one magnetic sensor configured to measure a magnetic field signal associated with the physical quantity to be measured.

In an embodiment, the signal acquisition circuit comprises at least two magnetic sensors, each configured to measure a magnetic field (e.g. at least two magnetic field components, or at least two magnetic field gradients) associated with the physical quantity to be measured.

In an embodiment, the signal acquisition circuit comprises at least three magnetic sensors, each configured to measure a magnetic field (e.g. at least two magnetic field components, or at least two magnetic field gradients) associated with the physical quantity to be measured.

In an embodiment with at least two magnetic sensors, preferably these at least two magnetic sensors are arranged to provide two sinusoidal signals which are substantially 90° phase shifted, and which preferably also have substantially the same amplitude.

In an embodiment with at least three magnetic sensors, preferably these at least three magnetic sensors are arranged to provide three sinusoidal signals which are substantially 120° phase shifted, and which preferably also have substantially the same amplitude.

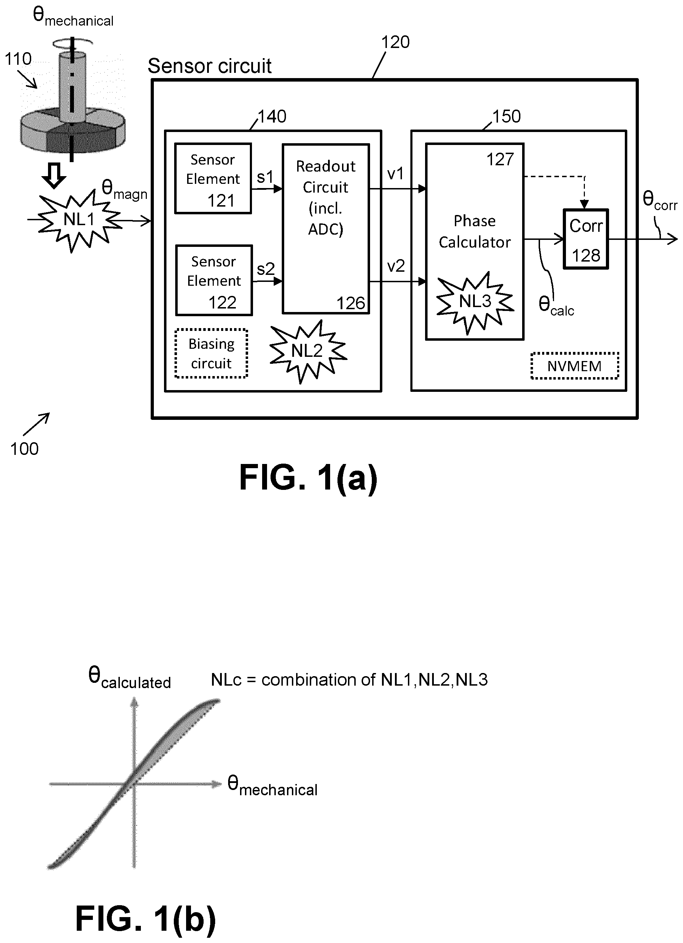

In an embodiment (e.g. illustrated in FIG. 1 to FIG. 4), the first sub-circuit comprises said phase generator (e.g. estimator) followed by said combiner, and the phase generator is arranged for receiving and converting said at least one input signal (e.g. v1, v2) into said phase signal (e.g. θcalc), and wherein said combiner is configured for receiving and combining said phase signal (e.g. θcalc) and said feedback signal (e.g. θfb1; θfb2).

In an embodiment, the second sub-circuit comprises a nonlinear function block arranged for receiving and modifying said filtered signal (e.g. θcorr) using a (e.g. memoryless) non-linear function; and the at least one feedback signal (e.g. θfb1; θfb2) is derived from the modified signal.

In an embodiment, the filter has a frequency dependent transfer function T(s), wherein T(s) is chosen such that [T(s)-1] has at least one zero at DC, and wherein the nonlinear function block is configured to output a feedback signal in the form of θfb1 = f(θo)- θo, where θfb1 is the feedback signal, f() is a predefined non-linear function, and θo is the output value.

In practice, the function f() is preferably chosen such that f(θo) is an estimate of the input (θi). The function f() may be determined by simulation, or by a calibration test, e.g. by an end-of-line test in production. The function f() may for example be specified by a plurality of values, or a plurality of coefficients or coordinates, which are stored in a non-volatile memory of the device (e.g. Flash or EEPROM). The predefined non-linear function f() may be implemented using a look-up table with or without interpolation. The predefined non-linear function f() may be implemented using a piecewise linear approximation.

In an embodiment, the transfer function T(s) is chosen such that [T(s)-1] has at least two zeros at DC.
"at DC" means "at 0 Hz". Such a filter allows to follow a ramp signal with a steady state error equal to zero. Such a filter T is sometimes called a zero-latency filter (ZLF).

In an embodiment, the filter has a frequency dependent transfer function H(s), and H(s) has at least one pole at DC, and the nonlinear function block is configured to output a feedback signal in the form of θfb = f(θo), where θfb is the feedback signal, f() is a predefined non-linear function, and θo is the output value.

In practice, the function f() is preferably chosen such that f(θo) is an estimate of the input (θi), for example using a look-up table with or without interpolation, or using a piecewise-linear approximation. The function f() may be determined by simulation, or by a calibration test, e.g. by an end-of-line test in production. The function f() may for example be specified by a plurality of values, or a plurality of coefficients or coordinates, which are stored in a non-volatile memory of the device (e.g. Flash or EEPROM). The predefined non-linear function f() may be implemented using a look-up table with or without interpolation. The predefined non-linear function f() may be implemented using a piecewise linear approximation.

In an embodiment, the transfer function H(s) has at least two poles at DC.
"at DC" means "at 0 Hz".

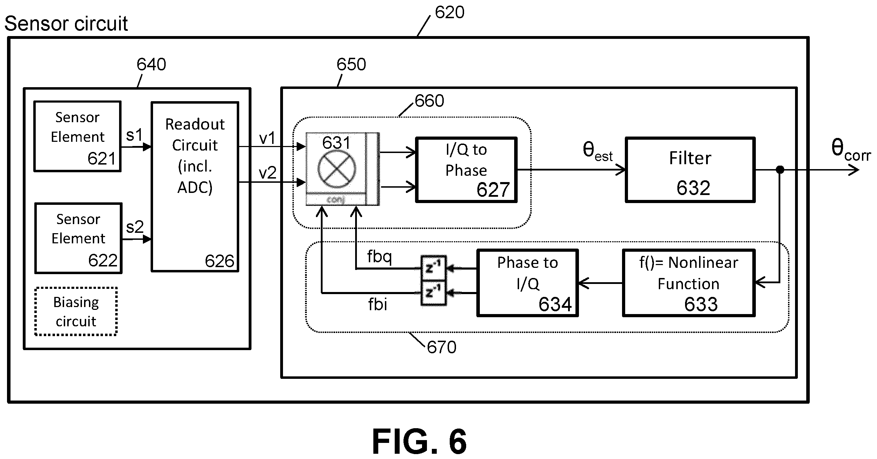

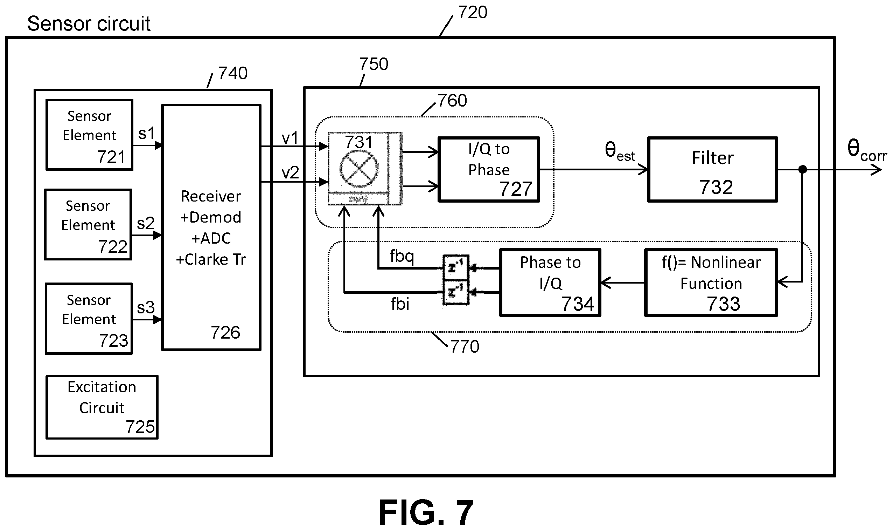

In an embodiment (e.g. illustrated in FIG. 6 or FIG. 7), the first sub-circuit comprises said combiner followed by said phase generator, and the combiner is arranged for receiving and combining said at least one input signal (e.g. v1, v2) and said at least one feedback signal (e.g. fbi; fbq), and the phase generator is configured for converting the combined signal into said phase signal (e.g. θest).

In an embodiment, the second sub-circuit comprises a nonlinear function block arranged for receiving and modifying said filtered signal (e.g. θcorr), or a signal derived therefrom, using a (e.g. memoryless) non-linear function; and the second sub-circuit further comprises a phase-to-I/Q convertor configured for receiving and converting this modified signal into at least two component signals; and the feedback signals (e.g. fbi; fbq) are derived from these component signals.

In an embodiment, the signal acquisition circuit comprises a plurality of magnetic sensitive elements (e.g. at least two Hall elements, or at least two MR elements, or at least two coils) configured to measure a magnetic field associated with the physical quantity to be measured, and configured to provide a plurality of signals (e.g. v1, v2), each signal being a function (e.g. first function) of an input phase (e.g. θi) of said physical quantity; and the processing circuit (comprising a phase generator or phase estimator or angle estimator) is configured to derive from said plurality of signals (e.g. v1, v2) an uncorrected phase value (e.g. θcalc) representative of said input phase (e.g. θi); and the correction circuit is arranged for receiving said uncorrected phase value (e.g. θcalc) and for providing a corrected output phase value (e.g. θcorr) having a reduced error, e.g. having an improved linearity with respect to the input phase (e.g. θi); and i) the combiner is arranged for receiving and combining said uncorrected phase value (e.g. θcalc) and the feedback signal (e.g. θfb1; θfb2); and ii) the frequency dependent filter is configured for receiving and filtering the output of said combiner, and for generating said corrected output phase value (e.g. θcorr); and iii) the nonlinear function block is configured for receiving said corrected output phase value (e.g. θcorr).

The physical quantity may be e.g. a linear or angular position of a magnet, or an AC current value. The phase value may be an angle value. The processing circuit may be a phase generator or phase estimator or an angle estimator. The combiner may be a summation circuit or a subtraction circuit. The filter may be a noise filter.

Ideally the phase of the magnetic field is identical to the phase of the physical quantity, but in practice there may be a (first) non-linear relationship, e.g. due to mechanical misalignment of a magnet, imperfect PCB layout of an inductive angle sensor, etc. And ideally, the phase value provided by the processing circuit is identical to the phase of the magnetic field, but in practice there may be a (second) non-linear relationship, e.g. due to imperfections of the processing circuit. This may for example be the case if the processing circuit is a tracking loop emulating an arctangent function.

It is an advantage of the correction circuit that it can reduce or substantially compensate said first and/or second non-linearity created inside and/or outside of the sensor device.

The inventors surprisingly found that the feedback signal has to be injected before the frequency dependent filter, otherwise the non-linearity correction does not work, and may even make the signal worse.

In an embodiment, the processing circuit introduces a non-linearity (e.g. NL2); and the nonlinearfunction block is configured to reduce or substantially eliminate at least the non-linearity (e.g. NL2) introduced by the processing circuit.

Or stated in other words, in this embodiment the value provided by the processing circuit (e.g. a phase value provided by the phase calculator) can be expressed or approximated by a (desired) linear function, plus a (non-desired) nonlinear error function (NL2) of the value at its input.

In an embodiment, the processing circuit comprises a tracking loop that introduces said non-linearity (e.g. NL2).

In some embodiments, the first and the second signal provided by the tracking loop are analogue signals. In other embodiments, the first and the second signal provided by the tracking loop are digital signals.

In an embodiment, the tracking loop comprises at least four magnetic sensitive elements; and the processing circuit is configured for generating said uncorrected phase value based on a coarse signal and a fine signal, where the coarse signal is generated based on signs of the digital signals.

It is an advantage of this embodiment that the processing circuit can provide an estimate of an arctangent function up to relatively high speed, e.g. at a speed of at least 100 MHz, or at least 200 MHz, or at least 500 MHz, or at least 1000 MHz, but the estimate may have an absolute error of about ±4°.

It is an advantage of the correction circuit that it can reduce this error to a value smaller than ±1°, or smaller than ±0.5°, or smaller than ±0.25°, even at such a high speed.

According to a second aspect, the present invention also provides a position sensor system comprising: a magnetic source configured for generating a magnetic field having a phase indicative of a mechanical position (e.g. θmech); and a magnetic sensor circuit according to the first aspect; wherein the input phase (of the magnetic field sensed by the magnetic sensor circuit can be expressed as a sum of a linear function of said mechanical position (e.g. θmech), and a nonlinear error function (e.g. NL1) of said mechanical position; and wherein the nonlinear function block is configured to reduce or at least partially compensate or substantially eliminate said nonlinear error function (e.g. NL1).

In an embodiment, the second sub-circuit is configured for reducing or substantially eliminating at least errors, e.g. higher harmonics, related to or caused by mechanical non-idealities of the magnetic source, situated outside of the magnetic sensor circuit.

In an embodiment, the magnetic source is a permanent magnet which is movable relative to the magnetic sensor circuit, or vice versa; and the second sub-circuit is configured for reducing or substantially eliminating at least errors, e.g. higher harmonics, related to mechanical mounting aspects (or mechanical non-idealities), e.g. selected from the group consisting of: position offset, tilt, eccentricity.

In an embodiment, the position sensor system comprises: a printed circuit board comprising a plurality of coils; and a target which is movable relative to said plurality of coils; and said magnetic sensor circuit; and the second sub-circuit is configured for reducing or substantially eliminating at least errors, e.g. higher harmonics, related to mechanical mounting aspects (or mechanical non-idealities) of the target, e.g. selected from the group consisting of: position offset, tilt, eccentricity, and/or related to layout aspects of the plurality of coils.

According to a third aspect, the present invention also provides a current sensor system, comprising: a current conductor (e.g. a busbar, or an integrated electrical conductor portion) for conducting a current to be measured; and a sensor circuit according to the first aspect, configured for measuring a magnetic field generated by the current to be measured.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

**FIG. 1(a)** is a schematic representation of an angular position sensor system according to an embodiment of the present invention, comprising a permanent magnet, and a sensor circuit configured for measuring an angular position of the magnet. Nonlinearities (or non-idealities) may be introduced at several places. In the example, a first nonlinearity may be introduced when converting a mechanical angle into magnetic field values, and a second nonlinearity may be introduced inside the sensor device when converting the magnetic signals into electrical signals by the magnetic sensor elements or circuit, and a third non-linearity may be introduced when calculating or estimating an angular position based on the signals provided by the sensor elements. The sensor circuit comprises a correction circuit operating in the angular domain, and configured for reducing these nonlinearities.
**FIG. 1(b)** shows an example of the combination of the first, second and third non-linearity, illustrated as a non-linear relationship between the (magnetic) angle θcalculated and the mechanical angle θmechanical.
**FIG. 2(a)** shows a block diagram of a classical correction circuit for reducing the non-linearity described in FIG. 1(a) and FIG. 1(b).
**FIG. 2(b)** shows the inverse of the function shown in FIG. 1(b), which, when combined with the non-linearity function of FIG. 1(b) is highly linear.

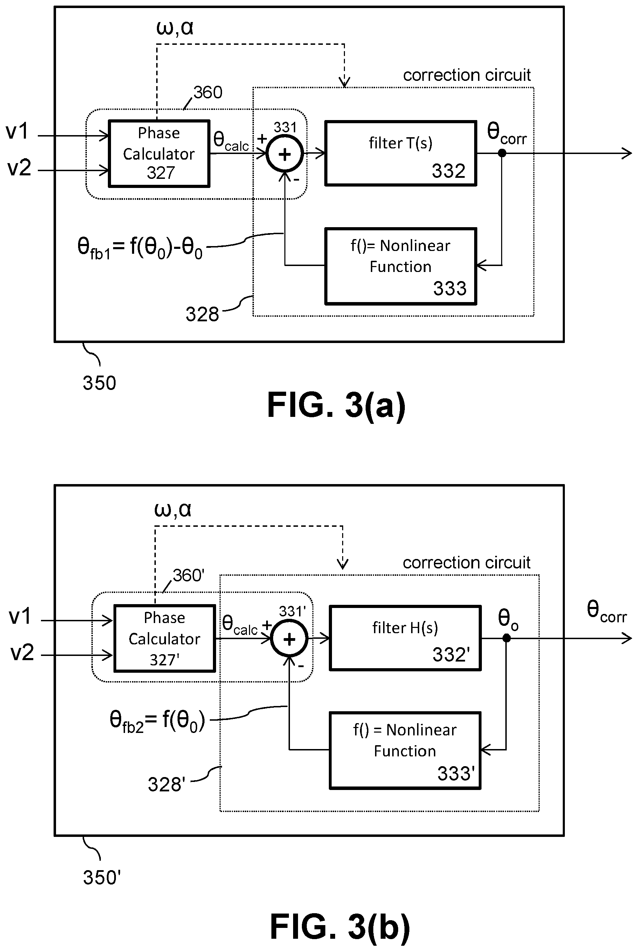

**FIG. 3(a)** and **FIG. 3(b)** show a block diagram of a first and a second processing circuit proposed by the present invention, configured for calculating an angle, and reducing or correcting a nonlinearity error. This processing circuit may be used in the system of FIG. 1(a). In the embodiment of FIG. 3(a) and FIG. 3(b), the processing circuit comprises a phase calculator, followed by a correction circuit comprising a combiner and a filter and a non-linear function block arranged in a closed loop. The correction circuit is arranged downstream (after) the phase calculator, hence the combiner and the filter and the non-linear function block operate in the angular domain.
**FIG. 4(a)** shows an illustrative example of a circuit having a topology as shown in FIG. 3(a), wherein the processing circuit is configured to determine the angle using a "tracking loop".
**FIG. 4(b)** shows an illustrative example of a typical error between the calculated angular value θcalc provided by the angle calculator 427 of FIG. 4(a).
**FIG. 4(c)** shows an illustrative example of a typical error between the corrected angle θcorr provided by the correction circuit 428 of FIG. 4(a) as a function of the input angle.

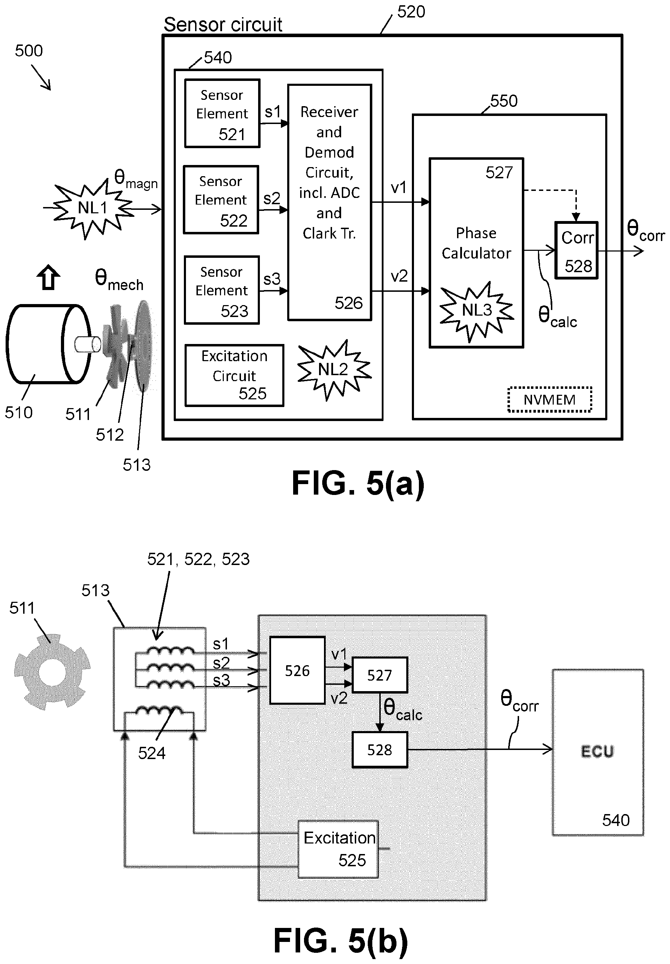

**FIG. 5(a)** is a schematic representation of an inductive angular position sensor system according to an embodiment of the present invention, comprising: a printed circuit board (PCB) comprising a plurality of coils, and a conductive target, and a sensor circuit configured for measuring an angular position of the target. Nonlinearities (or non-idealities) may be introduced at several places. In the example, a first nonlinearity may be introduced when converting a mechanical angle into magnetic field values, a second nonlinearity may be introduced in the receiver and demodulation circuit, and a third nonlinearity may be introduced by the phase calculator or phase generator or phase estimator inside the sensor device.
**FIG. 5(b)** shows an illustrative block diagram of an inductive angular position sensor system comprising a printed circuit board comprising one transmitter coil and three receiver coils. The system further comprises a sensor circuit configured for calculating the angular position in a manner that reduces the above mentioned nonlinearities, and for outputting the angular position to an external processor (e.g. to an Electronic Control Unit, ECU).
**FIG. 6** shows another embodiment of the present invention, having a signal acquisition circuit similar to that of FIG. 1(a), but having another processing circuit for determining the angular position and reducing the non-linearity error. The processing circuit comprises a combiner, a phase generator or a phase estimator, a filter, a non-linear function block and a phase-to-I/Q convertor arranged in a closed loop, wherein the combiner operates in the I/Q domain; and wherein the filter and the non-linear function block operate in the angular domain. The I/Q domain is located upstream (before) the phase generator or phase estimator and downstream (after) the phase-to-I/Q convertor. The angular domain is located downstream (after) the phase generator or phase estimator and upstream (before) the phase-to-I/Q convertor.
**FIG. 7** shows another embodiment of the present invention, having a signal acquisition circuit similar to that of FIG. 5(a), and having the processing circuit of FIG. 6.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same or like reference signs (e.g. having same modulo 100) typically refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

The terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In this document, the terms "phase calculator" and "angle calculator" can be used interchangeably, unless explicitly mentioned otherwise.

In this document, the expression "phase generator" is used as a general term, and encompasses the expression "phase calculator" and "phase estimator". While the expression "phase calculator" suggests that the result is more accurate than for a "phase estimator", the three expressions can be used interchangeably in this document.

The expression "reducing the error over a measurement range", may mean: reducing the maximum error over said measurement range, or an average error, or a total squared error (e.g. sum of integral of the squared error).

With "improving linearity" is meant: reducing an error between a measured curve and the ideal curve.

In embodiments of the present invention, "improved linearity" can mean "having an improved linear regression coefficient", meaning, "having a linear regression coefficient closer to 1.000".

With "5 krpm electrical" is meant "5000 revolutions or rotations per minute of the electrical signal". For example, if a target of an inductive position sensor system contains five lobes, and is mounted on a shaft that rotates at an angular speed of 1000 rotations per minute (mechanical), the electrical signal has an angular speed of 5 krpm electrical.

The present invention relates to the field of sensor systems and devices, and may comprise various types of sensors, e.g. one or more light sensor, one or more magnetic sensor, one or more accelerometer, etc. The principles of the present invention will be explained mainly for a magnetic position sensor system comprising a permanent magnet, and for an inductive angular position sensor system, but the present invention is not limited thereto, and is more generally applicable to other types of sensors and systems, especially magnetic sensors and systems.

**FIG. 1(a)** is a schematic representation of an angular position sensor system 100, comprising a permanent magnet 110, and a sensor circuit 120. The permanent magnet 110 may be a two-pole magnet, or a four-pole magnet, or a magnet comprising more than four poles. The magnet 110 shown in FIG. 1(a) is rotatable about a rotation axis, and the sensor circuit 120 is configured for determining the mechanical angle θmechanical.

Circuits and methods for determining the angular position θmechanical of the magnet 110 by measuring characteristics of the magnetic field generated by the magnet 110 using one or more magnetic sensor, are known in the art, for example from WO9854547(A1) or from WO2014029885(A1), just to name a few. Without going into the details, it suffices to know that the angular position of the magnet 110 can be determined for example by measuring a first magnetic signal behaving like a sine-function of the mechanical position, and a second magnetic signal behaving like a cosine function of the mechanical position, and by calculating an arctangent of the ratio of the sine and cosine signal.

This can for example be accomplished by the sensor circuit 120 shown in FIG. 1(a), comprising a first sensor element 121 providing a first sensor signal s1, and comprising a second sensor element 122 providing a second sensor signal s2. The first and second sensor element 121, 122 may for example be a horizontal Hall element, a vertical Hall element, a magneto-resistive element (MR element), etc.

Biasing and readout-circuits of magnetic sensor elements are well known in the art, and are not the focus of the present invention, and hence do not need to be explained in more detail here. In the example of FIG. 1(a), the readout circuit 126 may comprise at least one analog-to-digital convertor ADC, and the readout circuit 126 may provide two digital signals v1, v2 to the processing block 150.

In practice, however, the signals v1 and v2 are typically not a perfect sine and cosine signal, for various reasons. One reason may be that the first magnetic field component measured at the first sensor location, at a predefined distance from the magnet (e.g. at about 1.0 mm), may not be a perfect sine signal, and/or the second magnetic field component measured at the second sensor location may not be a perfect cosine signal. This can happen for example if the sensor device is not perfectly aligned to the magnet, or is tilted, or if the magnet is not perfect, etc., causing a non-linearity. This is schematically indicated in FIG. 1(a) by the symbol "NL1" representing a first nonlinearity or a first non-ideality.

But also the biasing and readout circuit is typically not perfect, e.g. due to amplifier offset or gain offset, or non-linearity caused by the analog-to-digital convertor. This is schematically indicated in FIG. 1(a) by the symbol "NL2".

In the sensor circuit of FIG. 1(a), the signals v1 and v2 are applied to the processing circuit 150. The processing circuit 150 comprises a "phase generator", also referred to herein as a "phase calculator", or "angle calculator". This block 127 may be configured for determining (e.g. calculating) an angular value θcalc based on an arctangent of a ratio of v1 and v2. In practice, however, the value θcalc provided by the phase calculator 127 is only an approximate value which may deviate more or less from arctan(v1/v2) depending on the implementation, e.g. due to a limited number of bits, and/or due to the way in which the division is implemented, and/or due to the way in which the arctangent function is implemented (e.g. using an iterative formula, or as a Taylor series, or as a look-up table with/without interpolation, etc.). In other words, the phase calculator 127 may also introduce a non-linearity (or non-ideality), schematically represented by the symbol NL3.

In practice, the effects of the various nonlinearities NL1, NL2 and NL3 typically cumulate, and may be represented by a combined or overall non-linearity NLo, an example of which is shown in **FIG. 1(b)****,** as an illustrative example only.

The inventors of the present invention wanted to find a solution to improve the accuracy of the sensor device (excluding the magnet) and/or the accuracy of the sensor system (including the magnet), by reducing at least one of the non-linearity errors, preferably reducing all of the non-linearity errors, and more preferably substantially eliminating or compensating the overall non-linearity error.

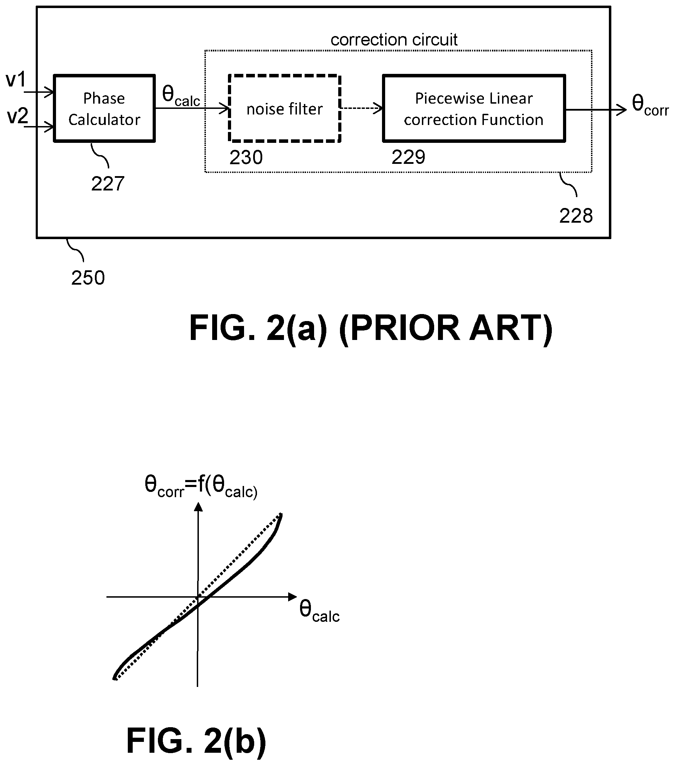

**FIG. 2(a)** illustrates a classical solution to this problem.

**FIG. 2(a)** shows a block diagram of a correction circuit 228 arranged for correcting the signal provided by the phase calculator 227.

**FIG. 2(b)** shows the inverse of the function shown in FIG. 1(b).

The correction circuit 228 is configured for receiving the calculated angle θcalc from the phase calculator block 227, and for converting this value into a corrected value θcorr using a predefined remapping function, e.g. using a piecewise linear correction function interconnecting a limited number of points (e.g. from 4 to 32 points, e.g. about 8 points, or about 12 points, or about 16 points, or about 24 points). The non-linearity function, or the coordinates of these points may be determined for example during a calibration test, in which the magnet is positioned at a plurality of predefined angular positions, (e.g. at multiples of 30°), and by storing the calculated angular values θcalc in a non-volatile memory of the sensor device. Later, during normal operation, the sensor device can then use a piecewise-linear interpolation between these point to correct the calculated value θcalc in order to reduce the non-linearity error.

By choosing the piecewise-linear correction function as an approximation of the inverse function of the combination of nonlinearities NL1, NL2 and NL3 described above, the non-linearity can be largely reduced. This technique is used in commercial products, and is well known in the art, and thus does not need to be described in more detail here.

The correction circuit 228 may optionally comprise a noise filter 230, e.g. having a low-pass characteristic. This may be helpful to smooth the output signal in case of a relatively slowly rotating magnet (e.g. at an angular speed lower than 100 rpm). This noise filter may for example be implemented as a low pass FIR filter (Finite Impulse Response), or as an Exponential Moving Average filter (EMA). In a practical implementation, this noise filter may be disabled or bypassed.

During the design of a new sensor device, the inventors of the present invention discovered however, that under certain conditions, the solution proposed in FIG. 2(a) and FIG. 2(b) did not work very well, and actually made the results less accurate than without the correction circuit 228.

After further investigating this problem, it was found that the correction circuit 228 of FIG. 2(a) appears to works quite well for relatively low speed, but does not work very well at relatively high speed, e.g. in the order of about 100 krpm electrical, or higher.

Desiring to reduce one or more, and preferably all of the nonlinearities also at such a high speed, the inventors started experimenting using various circuit topologies, and they surprisingly found four circuit topologies, illustrated in FIG. 3(a), FIG. 3(b), FIG. 6 and FIG. 7, that give satisfactory results.

**FIG. 3(a)** shows a block diagram of a first processing circuit 350 proposed by the present invention, comprising a phase calculator 327 followed by a correction circuit 328 for reducing or correcting one or more nonlinearity errors. This arrangement can be used in sensor circuits like the one shown in FIG. 1(a), for reducing one or more or all of the nonlinearities NL1, NL2, NL3.

As can be seen, the correction circuit 328 is arranged for receiving an uncorrected signal θcalc from the phase calculator 327, and for providing a corrected output signal θcorr. The correction circuit 328 comprises:
i) a combiner 331 arranged for receiving and combining said uncorrected signal θcalc and a feedback signal θfb1, and
ii) a frequency dependent filter 332 configured for receiving and filtering an output of said combiner 331, and for generating said corrected output signal θcorr, and
iii) a nonlinear function block 333 configured for receiving said corrected output signal θcorr, and for generating said feedback signal θfb1 using a non-linear function f(θ), e.g. the inverse function shown in FIG. 2(b), or an approximation thereof, e.g. a piecewise-linear approximation.

The frequency dependent filter 332 has a transfer characteristic T(s), wherein [T(s)-1] has at least one zero at DC (i.e. at 0 Hz), but preferably has at least two zeros at DC. The latter is called a Zero Latency Filter (ZLF).

The feedback signal θfb1 provided by the nonlinear function block 333 may be expressed by the following formula: θfb1=f(θ₀)-θ₀, where θ₀ is the output value provided by the filter T(s), and f(θ₀) is a non-linear transformation of said output value.

The combiner 331 may be configured to provide an output as a linear combination of the uncorrected value Scale and the feedback signal θfb1, for example as an addition or a subtraction.

Simulations have demonstrated that this circuit works very well, even for relatively high speed up to about 200 krpm electrical, or even up to 300 krpm, or even up to 400 krpm, or even up to 500 krpm, or even up to 600 krpm, or even up to 700 krpm.

It is noted that the correction circuit 328 can be implemented completely in the digital domain.

In an embodiment, the phase calculator circuit 327 may be further configured for determining an angular speed ω and/or an angular acceleration α, e.g. as a first and second time derivative of the angular position, and one or both of these values may optionally be provided to the correction circuit 328. The latter may be configured for adjusting the filter characteristic T(s) and/or the non-linear function f() taking into account one or both of said angular speed ω and/or angular acceleration α. For example, in a particular implementation, the correction circuit 328 comprises two filters, one of which is chosen dependent on whether the angular speed is higher or lower than a predefined threshold value.

In FIG. 3(a) the processing block 327 that provides an estimate of the physical value to be measured is a phase calculator, which may perform an arctangent function of a ratio of the signals v1, v2, but the present invention is not limited hereto, and another processing block 327 may also be used.

**FIG. 3(b)** shows a block diagram of a second processing circuit 350' proposed by the present invention, comprising a phase calculator 327' followed by a correction circuit 328' for reducing or correcting a nonlinearity error. This arrangement can also be used in sensor circuits like the one shown in FIG. 1(a), for reducing one or more or all of the nonlinearities NL1, NL2, NL3. The processing circuit 350' is a variant of the processing circuit 350. The phase calculator 327' of FIG. 3(b) may be identical to the phase calculator 327 of FIG. 3(a), but the correction circuit 328' is different.

As can be seen, the correction circuit 328' is arranged for receiving an uncorrected value θcalc from the phase calculator 327', and for providing a corrected output signal θcorr. The correction circuit 328' comprises:
i) a combiner 331' arranged for receiving and combining said uncorrected signal θcalc and a feedback signal θfb2, and
ii) a frequency dependent filter 332' configured for receiving and filtering an output of said combiner 331', and for generating said corrected output signal θcorr, and
iii) a nonlinear function block 333' configured for receiving said corrected output signal θcorr, and for generating said feedback signal θfb2 using a non-linear function f(θ).

The frequency dependent filter 332' has a transfer characteristic H(s) with at least one pole at DC (i.e. at 0 Hz), but preferably having at least two poles at DC.

The feedback signal θfb2 provided by the nonlinear function block 333' may be expressed by the following formula: θfb2= f(θ₀), where θ₀ is the output value provided by the filter H(s), and f(θ₀) is a non-linear transformation of said output signal.

The combiner 331' may be configured to provide an output as a linear combination of the uncorrected signal θcalc and the feedback signal θfb2, for example as an addition or subtraction.

In a variant (not shown), the block 333 of FIG. 3(a) and/or the block 333' of FIG. 3(b) may comprise one or more storage elements, and/or one or more delay elements, and/or one or more scalers, and may provide a combination of a non-linear function of the value θ₀ at its input and one or more previous values.

In an embodiment, the block 333 of FIG. 3(a) and/or the block 333' of FIG. 3(b) may comprise a piecewise linear interpolator and a FIR filter, and be configured for providing a combination of a piecewise linear transformed version and a FIR filtered version of the value θ₀ applied at its input.

In an embodiment, the block 333 of FIG. 3(a) and/or the block 333' of FIG. 3(b) do not contain a FIR filter or a delay element, but only contain said piecewise linear interpolator.

Also in this case, the phase calculator 327' may optionally provide one or both of an angular speed ω and/or an angular acceleration α to the correction circuit 328', which may adjust its behaviour depending on one or both of these values (speed and/or acceleration).

In FIG. 3(b) the phase calculator 327' that provides an estimate of the physical value to be measured, may perform an arctangent function of a ratio of the signals v1, v2, but the present invention is not limited hereto, and another processing block may also be used.

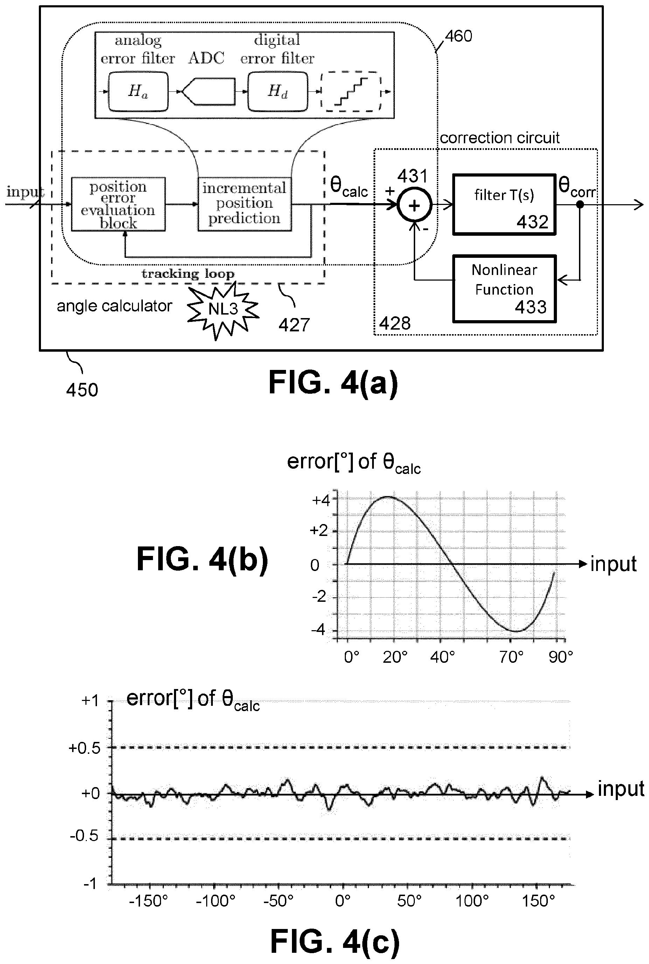

**FIG. 4(a)** shows an illustrative example of an implementation of a circuit as shown in FIG. 3(a), wherein the "phase generator" or "angle calculator" 427 is implemented using a so called "tracking loop". In a particular embodiment, this tracking loop may be implemented as described in more detail in EP3528388(A1), incorporated herein by reference in its entirety, in particular the circuit shown in FIG. 2 thereof, and the corresponding text.

As can be seen, the processing circuit 450 comprises an angle calculator 427 comprising a tracking loop, and the processing circuit 450 further comprises a correction circuit 428, but the correction circuit 428 is arranged downstream of the angle calculator 427, outside of the tracking loop.

It is a major advantage of this "tracking loop" that it can be used to calculate or estimate or approximate or emulate an arctangent function without actually requiring a programmable DSP (digital signal processor) or arithmetic unit.

**FIG. 4(b)** shows an illustrative example of a typical error between the calculated angular value θcalc provided by the tracking loop 427 (e.g. implemented as described in EP3528388), and the angular value corresponding to the one or more sensor signals applied to its input. As can be seen, there is a predefined relationship between the angular value corresponding to the input signal(s) and the calculated value. This error can be regarded as a "non-linearity error" NL3 as described above.

**FIG. 4(c)** shows an illustrative example of a typical error between the corrected angle θcorr provided by the correction circuit 428 as a function of the input angle "input". As can be seen, the correction circuit 428 is capable of reducing the error of about ±4.0° illustrated in FIG. 4(b) to an error of only about ±0.2° illustrated in FIG. 4(c), i.e. is capable of reducing the error by a factor of more than 10.

As already mentioned above, the principles of the present invention are not limited to magnetic position sensor systems comprising a magnet, for example as illustrated in FIG. 1(a), but can also be used for other kind of sensor systems and circuits, e.g. comprising one or more magnetic sensors, one or more light sensors, one or more pressure sensors, one or more accelerometers, etc.

**FIG. 5(a)** and **FIG. 5(b)** show a schematic representation of an inductive angular position sensor system 500, comprising a printed circuit board (PCB) 513, and a sensor circuit 520 and a conductive target 511. The sensor circuit 520 comprises a signal acquisition circuit 540 and a processing circuit 550. The signal acquisition circuit 540 comprises a plurality of coils, e.g. one transmitter coil and three receiver coils, the latter functioning as sensor elements 521, 522, 523. The sensor circuit 520 is configured for determining an angular position θmech of the target 511.

Nonlinearities (or non-idealities) may be introduced at several places. For example, a first nonlinearity NL1 may be introduced when converting the mechanical angle θmech into electrical or magnetic signals (e.g. into three modulated AC signals); a second nonlinearity NL2 may be introduced by the "Receiver and Demodulation circuit" 526. This circuit may also include at least one analog-to-digital convertor ADC, and optionally also a Clarke transformation circuit; A third nonlinearity NL3 may be introduced inside the processing circuit 550 itself, e.g. by the phase calculator 527, when calculating an angular position θcalc based on the input signals v1, v2. The nonlinearities NL1, NL2, NL3 are only shown for illustrative purposes, and in practice there may be more than three or less than three sources of nonlinearities, or there may be other nonlinearities, but the principles explained above remain the same.

Inductive position sensors are well known in the art, and hence need not be explained in full detail here. In orderto understand the present invention, it suffices to know that typically an alternating signal (AC signal) is applied to an excitation coil (also referred to as transmitter coil), which will generate an alternating magnetic field. The transmitter coil may have a circular shape surrounding the receiver coils, as is known in the art. This magnetic field is modulated by the angular position of the conductive target 511, which influences the signals s1, s2, s3 obtained by the receiver coils 521, 522, 523, acting as sensor elements. These signals can be converted into an angular position, e.g. in the "Receiver and Demodulation circuit" 526, using known techniques. Some inductive sensor systems contain only two receiver coils, which are arranged such that the received and demodulated signals are substantially 90° phase shifted.

In the example shown in FIG. 5(b), there are three receiver coils, which are arranged such that the received and demodulated signals are substantially 120° phase shifted. These three signals may be converted into quadrature signals v1, v2 in known manners, e.g. using a Clark transformation. A phase calculator 527 can then determine an angular position of the target based on these signals v1, v2. And a correction circuit 528 can reduce any nonlinearity errors, and provide the angular position θcorr with an improved accuracy to an external processor 540, for example to an electronic control unit (ECU). The correction circuit 528 can have a topology as illustrated in FIG. 3(a) or as illustrated in FIG. 3(b) described above.

This is of course only one illustrative example of an inductive position sensor, and many variations are possible. For example, many shapes of the target 511 are possible, and various layouts of the coils are possible, etc. (for example: C-shape, O-shape). The phase calculator 527 may be implemented using a digital processor (e.g. a DSP), or using a look-up table, or using a tracking loop, e.g. as described above in FIG. 4(a).

In certain embodiments, the corrected angle θcorr is converted into a sine and a cosine signal, which are then provided to the ECU. Such implementation is particularly useful for backwards compatibility with existing systems.

In a variant of the system shown in FIG. 5(b), the correction circuit 528 is not implemented inside the sensor device, but in the external processor 540.

Referring back to FIG. 1(a) to FIG. 5(b), in FIG. 1 to FIG. 5 sensor circuits (e.g. 120) are disclosed which are capable of reducing or substantially compensating nonlinearities introduced inside or outside of the sensor circuit up to a very high speed. These sensor circuits (e.g. 120) comprise a signal acquisition circuit (e.g. 140), and a processing circuit (e.g. 150). In these embodiments, the processing circuit (e.g. 150) is configured to receive at least one input signal v1, v2, for example two sinusoidal input signals substantially 90° phase shifted, or three sinusoidal signals substantially 120° phase shifted. In these embodiments, the processing circuit (e.g. 150) is configured for providing an output signal θcorr representative of the physical quantity to the measured, e.g. an angular position of a shaft connected to a magnet or connected to a conductive target.

Using the reference numbers of FIG. 3(a), the processing circuits of FIG. 1(a) and FIG. 5(a) comprise a closed loop formed by: a first sub-circuit 360, an output of which is connected to a filter 332, an output of which is connected to a second sub-circuit 333, an output of which is fed back to the first sub-circuit 360. More specifically, in these embodiments:
- the first sub-circuit 360 is arranged for receiving said at least one input signal v1, v2 and at least one feedback signal θfb1. The first sub-circuit comprises a phase generator 327 and a combiner 331, and provides phase signal θcalc. The phase estimator 327 is followed by the combiner 331.
- the filter 332 is a frequency dependent filter, is configured for receiving and filtering the phase θcalc, and is configured for providing the filtered signal as the output signal θcorr;
- the second sub-circuit 333 consists of a nonlinear function block 333, arranged for receiving said filtered signal θcorr as an input signal, and for converting this signal into a feedback signal θfb1 using a non-linear function, e.g. using a piecewise-linear approximation passing through a limited number of 8 to 32 predefined points.

As can be appreciated, this closed loop functions completely in the angular domain.

As mentioned above, the inventors also found another topology, which is also capable of reducing or substantially removing nonlinearities up to very high speed, e.g. up to 200 krpm electrical, or even up to 400 or 500 or 600 or 700 krpm electrical, as will be described next, illustrated by FIG. 6 and FIG. 7.

**FIG. 6** shows another embodiment of a processing circuit 620 proposed by the present invention, having a signal acquisition circuit 640 and a processing circuit 650. The signal acquisition circuit 640 may be similar or identical to that of FIG. 1(a), or variants thereof. But the processing circuit 650 is different from those described above.

The processing circuit 650 comprises a closed loop formed by: a first sub-circuit 660, an output of which is connected to a filter 632, an output of which is connected to a second sub-circuit 670, an output of which is fed back to the first sub-circuit 660. More specifically, in the specific embodiment shown in FIG. 6, the processing circuit 650 comprises a combiner 631, a phase estimator 627, a filter 632, a non-linear function block 633 and a phase-to-I/Q convertor 634 arranged in a closed loop. The combiner 631 operates in the I/Q domain. The filter 632 and the non-linear function block 633 operate in the angular domain.

In the specific embodiment of FIG. 6,
- the first sub-circuit 660 is arranged for receiving said at least one input signal v1, v2 and two feedback signals fbq, fbi. The first sub-circuit 660 comprises a combiner 631 followed by a phase estimator 627. The combiner 631 is configured for combining the input signals v1, v2 and the feedback signals fbq, fbi, for example by performing a complex multiplication of the input signals with the complex conjugate of the feedback signals. the phase estimator 627 is configured for converting the combined signals into a phase signal θest. The phase estimator 627 may be an I/Q-to-phase convertor;
- the filter 632 is a frequency dependent filter, is configured for receiving and filtering the estimated phase signal θest, and is configured for providing the filtered signal as the output signal θcorr;
- the second sub-circuit 333 comprises a nonlinear function block 633 followed by a phase-to-I/Q convertor 634. The nonlinear function block 670 is arranged for receiving and modifying said filtered signal θcorr using a (e.g. memoryless) non-linear function, e.g. using a piecewise-linear approximation function passing through a limited number of 8 to 32 predefined points which may be stored in a non-volatile memory. The phase-to-I/Q convertor 634 is configured for receiving and converting this modified signal into at least two component signals, from which two feedback signals fbi, fbq are derived, which are provided to the combiner 631.

As can be appreciated, this closed loop functions partly in the angular domain, and partly in the I/Q domain.

**FIG. 7** shows another embodiment of a processing circuit 720 proposed by the present invention, having a signal acquisition circuit 740 similar to that or identical to that of FIG. 5(a), and having the same or similar processing circuit 750 as that of FIG. 6.

If the three sensor signals s1, s2, s3 are obtained from an inductive sensor having three receiver coils, these modulated signals are preferably demodulated, digitized and converted into two-phase signals v1, v2, e.g. by using a Clarke Transformation, and then provided to the processing circuit 750.

The principles of the present invention are explained for four magnetic position sensor circuits, illustrated mainly in FIG. 1(a), in FIG. 5(a), in FIG. 6 and in FIG. 7, but the present invention is not limited thereto, and many variants are also contemplated. For example:
- in FIG. 1(a) and FIG. 5(a) the readout circuits 126, 526 provide two signals v1, v2 to a phase calculator 127, 527, and the latter calculates (or estimates) a phase or angle based on these signals. But the invention also works if a physical value is measured using a single sensor, e.g. an amplitude of a current to be measured. In this case, the phase calculator may be replaced by another processing block 527, e.g. an analog or a digital scaling block;
- in FIG. 1(a) and FIG. 5(a) the signals(s) v1, v2 are digital signals, but that is not absolutely required, and the step of digitization may also be performed after the processing block 527;

As mentioned before, the present invention also works in other systems, where another source (e.g. gravity force, light source) and/or another kind of sensor (e.g. an accelerometer, a light sensor) is used. The present invention therefore also discloses:
- a linear position sensor system, and an angular position sensor system, comprising a position sensor circuit or device, and a magnetic source, e.g. a permanent magnet.
- a current sensor system comprising a current sensor circuit or device, and an electrical conductor, such as an integrated conductor or an external conductor, e.g. a bus bar.
- a proximity sensor system comprising a sensor circuit or device, and a conductive target, which is movable relative to the sensor device.

## Claims

1. A sensor circuit (120; 520; 620; 720) for measuring a physical quantity, the sensor circuit comprising:
- a signal acquisition circuit (140; 540; 640; 740) comprising at least one sensor (121, 122; 521, 522, 523; 621, 622; 721, 722, 723) configured to provide at least one input signal (v1, v2) related to the physical quantity;
- a processing circuit (150; 350; 350'; 450; 550; 650; 750) configured to receive said at least one input signal (v1, v2) and for providing an output signal (θcorr) representative of the physical quantity; the processing circuit (150; 350; 350'; 450; 550; 650; 750) comprising a closed loop, comprising:
i) a first sub-circuit (360; 360'; 460; 660; 760) arranged for receiving said at least one input signal (v1, v2) and at least one feedback signal (fbi, fbq; θfb1; θfb2), and comprising a combiner (331; 331'; 431; 631; 731), and configured for providing a first signal (θest, θcalc);
ii) a frequency dependent filter (332; 332'; 432; 632; 732) configured for receiving and filtering said first signal (θest, θcalc), and for providing a filtered signal or a signal derived therefrom as the output signal (θcorr); and
iii) a second sub-circuit (333; 333'; 433; 670; 770) configured for receiving said filtered signal (θcorr), and for converting said filtered signal (θcorr) into said at least one feedback signal (fbi, fbq; θfb1; θfb2) using a non-linear function;
**characterised in that**
the non-linear function is a piecewise-linear approximation function defined by a plurality of parameters determined during a calibration procedure.

2. A sensor circuit according to claim 1,
wherein the piecewise linear approximation function passes through a limited number of points, e.g. through 4 to 32 points or through 8 to 32 points.

3. A sensor circuit (120; 520) according to any of the previous claims,
wherein the signal acquisition circuit (140; 540; 640; 740) comprises at least one magnetic sensor (121, 122; 521, 522, 523; 621, 622; 721, 722, 723) configured to measure a magnetic field signal associated with the physical quantity to be measured; or
wherein the signal acquisition circuit (140; 540; 740) comprises at least two magnetic sensors (121, 122; 521, 522, 523; 621, 622; 721, 722, 723), each configured to measure a magnetic field associated with the physical quantity to be measured; or
wherein the signal acquisition circuit (540; 740) comprises at least three magnetic sensors (521, 522, 523; 721, 722, 723), each configured to measure a magnetic field associated with the physical quantity to be measured.

4. A sensor circuit (120; 520; 620; 720) according to any of the previous claims,
wherein the physical quantity has an input phase (θi), and
wherein the output signal (θcorr) is a phase signal indicative of the input phase (θi); and
wherein the signal acquisition circuit (140; 540) comprises a plurality of sensors (121, 122; 521, 522, 523; 621, 622; 721, 722, 723) configured to provide a plurality of input signals (v1, v2), each being a function of said input phase (θi); and
wherein the first sub-circuit (360; 360'; 460; 660; 760) further comprises a phase generator (127; 327; 327'; 427; 527; 627; 727) configured to provide an estimate (θcalc; θest) of said input phase (θi); and
wherein the plurality of parameters of the piecewise-linear approximation function are chosen so as to provide the output phase (θcorr) so as to have an improved accuracy with respect to the input phase (θi).

5. A sensor circuit (120; 520) according to claim 4,
wherein the first sub-circuit (331; 331'; 431) comprises said phase generator (127; 327; 327'; 427) followed by said combiner (331; 331; 431), and wherein the phase generator (127; 327; 327'; 427) is arranged for receiving and converting said at least one input signal (v1, v2) into said phase signal (θcalc), and wherein said combiner (331; 331; 431) is configured for receiving and combining said phase signal (θcalc) and said feedback signal (θfb1; θfb2).

6. A sensor circuit (120; 520) according to claim 4 or claim 5,
wherein the second sub-circuit comprises a nonlinear function block (333; 333'; 433) arranged for receiving and modifying said filtered signal (θcorr) using said piecewise linear approximation function;
and where the at least one feedback signal (θfb1; θfb2) is derived from the modified signal.

7. A sensor circuit (120; 350) according to claim 6,
wherein the filter (332; 332') has a frequency dependent transfer function T(s), and
wherein T(s) is chosen such that [T(s)-1] has at least one zero at 0 Hz or has at least two zeros at 0 Hz, and
wherein the nonlinear function block (333) is configured to output a feedback signal in the form of θfb1 = f(θo)- θo, where θfb1 is the feedback signal, f() is a predefined non-linear function, and θo is the output value.

8. A sensor circuit (120; 350') according to claim 6,
wherein the filter (332') has a frequency dependent transfer function H(s), and
wherein H(s) has at least one pole at 0 Hz or has at least two poles at 0 Hz, and
wherein the nonlinear function block (333') is configured to output a feedback signal in the form of θfb = f(θo), where θfb is the feedback signal, f() is a predefined non-linear function, and θo is the output value.

9. A sensor circuit (620; 720) according to claim 4,
wherein the first sub-circuit (660; 760) comprises said combiner (631; 731) followed by said phase generator (627; 727),
and wherein the combiner (631; 731) is arranged for receiving and combining said at least one input signal (v1, v2) and said at least one feedback signal (fbi; fbq),
and wherein the phase generator is configured for converting the combined signal into said phase signal (θest).

10. A sensor circuit (620; 720) according to claim 9,
wherein the second sub-circuit comprises a nonlinear function block (670; 770) arranged for receiving and modifying said filtered signal (θcorr) using said piecewise linear approximation function;
and wherein the second sub-circuit (670; 770) further comprises a phase-to-I/Q convertor (634; 734) configured for receiving and converting this modified signal into at least two component signals;
and wherein the feedback signal (fbi; fbq) are derived from these component signals.

11. A sensor circuit (120; 520) according to any of the claims 6, 7, 8 or 10,
wherein the processing circuit (127; 527) introduces a non-linearity (NL2); and
wherein the nonlinear function block (333; 383; 670; 770) is configured to reduce or substantially eliminate at least the non-linearity (NL2) introduced by the processing circuit.

12. A sensor circuit according to any of the previous claims,
wherein the plurality of parameters of the piecewise linear approximation function are stored in a non-volatile memory of the sensor circuit.

13. A position sensor system (100; 500; 600; 700) comprising:
- a magnetic source configured for generating a magnetic field having a phase indicative of a mechanical position (θmech); and
- a sensor circuit (120; 520; 620; 720) according to any of the claims 3 to 11;
wherein the second sub-circuit is configured for reducing or substantially eliminating at least errors, e.g. higher harmonics, related to or caused by mechanical non-idealities of the magnetic source, situated outside of the magnetic sensor circuit.

14. A position sensor system (100; 500; 600; 700) according to claim 13,
wherein the magnetic source is a permanent magnet which is movable relative to the magnetic sensor circuit (120; 520; 620; 720), or vice versa;
and wherein the second sub-circuit is configured for reducing or substantially eliminating at least errors, e.g. higher harmonics, related to mechanical mounting aspects, e.g. selected from the group consisting of: position offset, tilt, eccentricity.

15. A position sensor system (100; 500; 600; 700) according to claim 13 or 14,
comprising a printed circuit board comprising a plurality of coils;
and comprising a target, which is movable relative to said plurality of coils;
and comprising said magnetic sensor circuit;
and wherein the second sub-circuit is configured for reducing or substantially eliminating at least errors, e.g. higher harmonics, related to mechanical mounting aspects of the target, e.g. selected from the group consisting of: position offset, tilt, eccentricity, and/or related to layout aspects of the plurality of coils.

16. A current sensor system, comprising:
- a current conductor for conducting a current to be measured; and
- a sensor circuit (120; 520) according to any of the claims 1 to 12, configured for measuring a magnetic field generated by the current to be measured.

## Patentansprüche

1. Sensorschaltung (120; 520; 620; 720) zum Messen einer physikalischen Größe, die Sensorschaltung umfassend:
- eine Signalerfassungsschaltung (140; 540; 640; 740), umfassend zumindest einen Sensor (121, 122; 521, 522, 523; 621, 622; 721, 722, 723), der zum Bereitstellen zumindest eines Eingangssignals (v1, v2) bezogen auf die physikalischen Größe konfiguriert ist;
- eine Verarbeitungsschaltung (150; 350; 350'; 450; 550; 650; 750), die zum Empfangen des zumindest einen Eingangssignals (v1, v2) und zum Bereitstellen eines für die physikalische Größe repräsentativen Ausgangssignals (θcorr) konfiguriert ist; wobei die Verarbeitungsschaltung (150; 350; 350'; 450; 550; 650; 750) eine geschlossene Schleife umfasst, umfassend:
i) eine erste Teilschaltung (360; 360'; 460; 660; 760), die zum Empfangen des zumindest einen Eingangssignals (v1, v2) und zumindest eines Rückkopplungssignals (fbi, fbq; θfb1; θfb2) angeordnet ist und einen Kombinierer (331; 331'; 431; 631; 731) umfasst und zum Bereitstellen eines ersten Signals (θest, θcalc) konfiguriert ist;
ii) einen frequenzabhängigen Filter (332; 332'; 432; 632; 732), der zum Empfangen und Filtern des ersten Signals (θest, θcalc) und zum Bereitstellen eines gefilterten Signals oder eines davon abgeleiteten Signals als das Ausgangssignal (θcorr) konfiguriert ist; und
iii) eine zweite Teilschaltung (333; 333'; 433; 670; 770), die zum Empfangen des gefilterten Signals (θcorr) und zum Umwandeln des gefilterten Signals (θcorr) in das zumindest eine Rückkopplungssignal (fbi, fbq; θfb1; θfb2) unter Verwendung einer nichtlinearen Funktion konfiguriert ist;
**dadurch gekennzeichnet, dass**
die nichtlineare Funktion eine stückweise lineare Näherungsfunktion ist, die durch eine Vielzahl von während eines Kalibrierungsverfahrens ermittelten Parametern definiert ist.

2. Sensorschaltung nach Anspruch 1,
wobei die stückweise lineare Näherungsfunktion durch eine begrenzte Anzahl von Punkten verläuft, z. B. durch 4 bis 32 Punkte oder durch 8 bis 32 Punkte.

3. Sensorschaltung (120; 520) nach einem der vorhergehenden Ansprüche,
wobei die Signalerfassungsschaltung (140; 540; 640; 740) zumindest einen Magnetsensor (121, 122; 521, 522, 523; 621, 622; 721, 722, 723) umfasst, der zum Messen eines mit der zu messenden physikalischen Größe verbundenen Magnetfeldsignals konfiguriert ist; oder
wobei die Signalerfassungsschaltung (140; 540; 740) zumindest zwei Magnetsensoren (121, 122; 521, 522, 523; 621, 622; 721, 722, 723) umfasst, die jeweils zum Messen eines mit der zu messenden physikalischen Größe verbundenen Magnetfelds konfiguriert sind; oder
wobei die Signalerfassungsschaltung (540; 740) zumindest drei Magnetsensoren (521, 522, 523; 721, 722, 723) umfasst, die jeweils zum Messen eines mit der zu messenden physikalischen Größe verbundenen Magnetfelds konfiguriert sind.

4. Sensorschaltung (120; 520; 620; 720) nach einem der vorhergehenden Ansprüche,
wobei die physikalische Größe eine Eingangsphase (θi) aufweist, und
wobei das Ausgangssignal (θcorr) ein Phasensignal ist, das die Eingangsphase (θi) angibt; und
wobei die Signalerfassungsschaltung (140; 540) eine Vielzahl von Sensoren (121, 122; 521, 522, 523; 621, 622; 721, 722, 723) umfasst, die zum Bereitstellen einer Vielzahl von Eingangssignalen (v1, v2) konfiguriert sind, die jeweils eine Funktion der Eingangsphase (θi) sind; und
wobei die erste Teilschaltung (360; 360'; 460; 660; 760) ferner einen Phasengenerator (127; 327; 327'; 427; 527; 627; 727) umfasst, der zum Bereitstellen einer Schätzung (θcalc; θest) der Eingangsphase (θi) konfiguriert ist; und
wobei die Vielzahl von Parametern der stückweise linearen Näherungsfunktion ausgewählt wird, um die Ausgangsphase (θcorr) so bereitzustellen, dass sie eine verbesserte Genauigkeit in Bezug auf die Eingangsphase (θi) aufweist.

5. Sensorschaltung (120; 520) nach Anspruch 4,
wobei die erste Teilschaltung (331; 331'; 431) den Phasengenerator (127; 327; 327'; 427) gefolgt von dem Kombinierer (331; 331; 431) umfasst, und wobei der Phasengenerator (127; 327; 327'; 427) zum Empfangen und Umwandeln des zumindest einen Eingangssignals (v1, v2) in das Phasensignal (θcalc) angeordnet ist, und wobei der Kombinierer (331; 331; 431) zum Empfangen und Kombinieren des Phasensignals (θcalc) und des Rückkopplungssignals (θfb1; θfb2) konfiguriert ist.

6. Sensorschaltung (120; 520) nach Anspruch 4 oder Anspruch 5,
wobei die zweite Teilschaltung einen nichtlinearen Funktionsblock (333; 333'; 433) umfasst, der zum Empfangen und Modifizieren des gefilterten Signals (θcorr) unter Verwendung der stückweisen linearen Näherungsfunktion angeordnet ist;
und wobei das zumindest eine Rückkopplungssignal (θfb1; θfb2) von dem modifizierten Signal abgeleitet ist.

7. Sensorschaltung (120; 350) nach Anspruch 6,
wobei der Filter (332; 332') eine frequenzabhängige Übertragungsfunktion T(s) aufweist, und
wobei T(s) so gewählt ist, dass [T(s)-1] zumindest eine Null bei 0 Hz oder zumindest zwei Nullen bei 0 Hz aufweist, und
wobei der nichtlineare Funktionsblock (333) zum Ausgeben eines Rückkopplungssignals in der Form θfb1 = f(θo)- θo konfiguriert ist, wobei θfb1 das Rückkopplungssignal ist, f() eine vordefinierte nichtlineare Funktion ist und θo der Ausgabewert ist.

8. Sensorschaltung (120; 350') nach Anspruch 6,
wobei der Filter (332') eine frequenzabhängige Übertragungsfunktion H(s) aufweist, und
wobei H(s) zumindest einen Pol bei 0 Hz oder zumindest zwei Pole bei 0 Hz aufweist, und
wobei der nichtlineare Funktionsblock (333') zum Ausgeben eines Rückkopplungssignals in der Form θfb = f(θo), konfiguriert ist, wobei θfb das Rückkopplungssignal ist, f() eine vordefinierte nichtlineare Funktion ist und θo der Ausgabewert ist.

9. Sensorschaltung (620; 720) nach Anspruch 4,
wobei die erste Teilschaltung (660; 760) den Kombinierer (631; 731) gefolgt von dem Phasengenerator (627; 727) umfasst,
und wobei der Kombinierer (631; 731) zum Empfangen und Kombinieren des zumindest einen Eingangssignals (v1, v2) und des zumindest einen Rückkopplungssignals (fbi; fbq) angeordnet ist,
und wobei der Phasengenerator zum Umwandeln des kombinierten Signals in das Phasensignal (θest) konfiguriert ist.

10. Sensorschaltung (620; 720) nach Anspruch 9,
wobei die zweite Teilschaltung einen nichtlinearen Funktionsblock (670; 770) umfasst, der zum Empfangen und Modifizieren des gefilterten Signals (θcorr) unter Verwendung der stückweisen linearen Näherungsfunktion angeordnet ist;
und wobei die zweite Teilschaltung (670; 770) ferner einen Phasen-zu-I/Q-Wandler (634; 734) umfasst, der zum Empfangen und Umwandeln dieses modifizierten Signals in zumindest zwei Komponentensignale konfiguriert ist;
und wobei das Rückkopplungssignal (fbi; fbq) von diesen Komponentensignalen abgeleitet ist.

11. Sensorschaltung (120; 520) nach einem der Ansprüche 6, 7, 8 oder 10,
wobei die Verarbeitungsschaltung (127; 527) eine Nichtlinearität (NL2) einführt; und
wobei der nichtlineare Funktionsblock (333; 383; 670; 770) zum Reduzieren oder im Wesentlichen Eliminieren zumindest der durch die Verarbeitungsschaltung eingeführten Nichtlinearität (NL2) konfiguriert ist.

12. Sensorschaltung nach einem der vorhergehenden Ansprüche,
wobei die Vielzahl von Parametern der stückweisen linearen Näherungsfunktion in einem nichtflüchtigen Speicher der Sensorschaltung gespeichert ist.

13. Positionssensorsystem (100; 500; 600; 700), umfassend:
- eine Magnetquelle, die zum Erzeugen eines Magnetfelds mit einer Phase konfiguriert ist, die eine mechanische Position angibt (θmech); und
- eine Sensorschaltung (120; 520; 620; 720) nach einem der Ansprüche 3 bis 11;
wobei die zweite Teilschaltung zum Reduzieren oder im Wesentlichen Eliminieren von zumindest Fehlern, z. B. höheren Harmonische, in Zusammenhang mit oder verursacht durch mechanische Nichtidealitäten der Magnetquelle, die sich außerhalb der Magnetsensorschaltung befindet, konfiguriert ist.

14. Positionssensorsystem (100; 500; 600; 700) nach Anspruch 13,
wobei die Magnetquelle ein Permanentmagnet ist, der relativ zu der Magnetsensorschaltung (120; 520; 620; 720) beweglich ist, oder umgekehrt;
und wobei die zweite Teilschaltung zum Reduzieren oder im Wesentlichen Eliminieren von zumindest Fehlern, z. B. höheren Harmonische, in Zusammenhang mit mechanischen Montageaspekten, z. B. ausgewählt aus der Gruppe bestehend aus Positionsversatz, Neigung, Exzentrizität, konfiguriert ist.

15. Positionssensorsystem (100; 500; 600; 700) nach Anspruch 13 oder 14,
umfassend eine Leiterplatte, die eine Vielzahl von Spulen umfasst;
und umfassend ein Ziel, das relativ zu der Vielzahl von Spulen beweglich ist;
und umfassend die Magnetsensorschaltung;
und wobei die zweite Teilschaltung zum Reduzieren oder im Wesentlichen Eliminieren von zumindest Fehlern, z. B. höheren Harmonische, in Zusammenhang mit mechanischen Montageaspekten des Ziels, z. B. ausgewählt aus der Gruppe bestehend aus Positionsversatz, Neigung, Exzentrizität, und/oder in Zusammenhang mit Layoutaspecten der Vielzahl von Spulen konfiguriert ist.

16. Stromsensorsystem, umfassend:
- einen Stromleiter zum Leiten eines zu messenden Stroms; und
- eine Sensorschaltung (120; 520) nach einem der Ansprüche 1 bis 12, die zum Messen eines durch den zu messenden Strom erzeugten Magnetfeldes konfiguriert ist.

## Revendications

1. Circuit de capteur (120; 520; 620; 720) pour mesurer une quantité physique, le circuit de capteur comprenant :
- un circuit d'acquisition de signal (140 ; 540 ; 640 ; 740) comprenant au moins un capteur (121, 122 ; 521, 522, 523 ; 621, 622 ; 721, 722, 723) configuré pour fournir au moins un signal d'entrée (v1, v2) lié à la quantité physique ;
- un circuit de traitement (150 ; 350 ; 350' ; 450 ; 550 ; 650 ; 750) configuré pour recevoir ledit au moins un signal d'entrée (v1, v2) et pour fournir un signal de sortie (θcorr) représentatif de la quantité physique; le circuit de traitement (150; 350; 350' ; 450; 550; 650; 750) comprenant une boucle fermée, comprenant :
i) un premier circuit secondaire (360 ; 360' ; 460 ; 660 ; 760) agencé pour recevoir ledit au moins un signal d'entrée (v1, v2) et au moins un signal de rétroaction (fbi, fbq ; θfb1; θfb2), et comprenant un combineur (331; 331' ; 431; 631; 731), et configuré pour fournir un premier signal (θest, θcalc);
ii) un filtre dépendant de la fréquence (332 ; 332' ; 432; 632; 732) configuré pour recevoir et filtrer ledit premier signal (θest, θcalc), et pour fournir un signal filtré ou un signal dérivé de celui-ci en tant que signal de sortie (θcorr) ; et
iii) un deuxième circuit secondaire (333 ; 333' ; 433 ; 670 ; 770) configuré pour recevoir ledit signal filtré (θtcorr), et pour convertir ledit signal filtré (θcorr) en ledit au moins un signal de rétroaction (fbi, fbq ; θtfb1 ; θtfb2) en utilisant une fonction non linéaire ;
**caractérisé en ce que**
la fonction non linéaire est une fonction d'approximation linéaire par morceaux définie par une pluralité de paramètres déterminés pendant une procédure d'étalonnage.

2. Circuit de capteur selon la revendication 1,
dans lequel la fonction d'approximation linéaire par morceaux passe par un nombre limité de points, par exemple par 4 à 32 points ou par 8 à 32 points.

3. Circuit de capteur (120 ; 520) selon l'une quelconque des revendications précédentes,
dans lequel le circuit d'acquisition de signal (140; 540; 640; 740) comprend au moins un capteur magnétique (121, 122; 521, 522, 523; 621, 622; 721, 722, 723) configuré pour mesurer un signal de champ magnétique associé à la quantité physique à mesurer ; ou
dans lequel le circuit d'acquisition de signal (140 ; 540 ; 740) comprend au moins deux capteurs magnétiques (121, 122 ; 521, 522, 523 ; 621, 622 ; 721, 722, 723), chacun étant configuré pour mesurer un champ magnétique associé à la quantité physique à mesurer ; ou
dans lequel le circuit d'acquisition de signal (540; 740) comprend au moins trois capteurs magnétiques (521, 522, 523 ; 721, 722, 723), chacun étant configuré pour mesurer un champ magnétique associé à la quantité physique à mesurer.

4. Circuit de capteur (120; 520; 620; 720) selon l'une quelconque des revendications précédentes,
dans lequel la quantité physique a une phase d'entrée (θi), et
dans lequel le signal de sortie (θcorr) est un signal de phase indicatif de la phase d'entrée (θi) ; et
dans lequel le circuit d'acquisition de signal (140; 540) comprend une pluralité de capteurs (121, 122; 521, 522, 523; 621, 622; 721, 722, 723) configurés pour fournir une pluralité de signaux d'entrée (v1, v2), chacun étant une fonction de ladite phase d'entrée (θi) ; et
dans lequel le premier circuit secondaire (360; 360' ; 460; 660; 760) comprend en outre un générateur de phase (127 ; 327; 327' ; 427; 527; 627; 727) configuré pour fournir une estimation (θcalc ; θest) de ladite phase d'entrée (θi) ; et
dans lequel la pluralité de paramètres de la fonction d'approximation linéaire par morceaux sont choisis de manière à fournir la phase de sortie (θcorr) de manière à avoir une précision améliorée vis-à-vis de la phase d'entrée (θi).

5. Circuit de capteur (120 ; 520) selon la revendication 4,
dans lequel le premier circuit secondaire (331 ; 331' ; 431) comprend ledit générateur de phase (127 ; 327 ; 327' ; 427) suivi par ledit combineur (331 ; 331 ; 431), et dans lequel le générateur de phase (127 ; 327 ; 327' ; 427) est agencé pour recevoir et convertir ledit au moins un signal d'entrée (v1, v2) en ledit signal de phase (θcalc), et dans lequel ledit combineur (331 ; 331; 431) est configuré pour recevoir et combiner ledit signal de phase (θcalc) et ledit signal de rétroaction (θfb1 ; θfb2).

6. Circuit de capteur (120 ; 520) selon la revendication 4 ou la revendication 5,
dans lequel le deuxième circuit secondaire comprend un bloc de fonction non linéaire (333 ; 333' ; 433) agencé pour recevoir et modifier ledit signal filtré (θcorr) en utilisant ladite fonction d'approximation linéaire par morceaux ;
et où l'au moins un signal de rétroaction (θfb1 ; θfb2) est dérivé du signal modifié.

7. Circuit de capteur (120 ; 350) selon la revendication 6,
dans lequel le filtre (332 ; 332') a une fonction de transfert T(s) dépendante de la fréquence, et
dans lequel T(s) est choisie de telle sorte que [T(s)-1] a au moins un zéro à 0 Hz ou a au moins deux zéros à 0 Hz, et
dans lequel le bloc de fonction non linéaire (333) est configuré pour fournir en sortie un signal de rétroaction sous la forme de θfb1 = f(θo)- θo, où θfb1 est le signal de rétroaction, f() est une fonction non linéaire prédéfinie, et θo est la valeur de sortie.

8. Circuit de capteur (120 ; 350') selon la revendication 6,
dans lequel le filtre (332') a une fonction de transfert H(s) dépendante de la fréquence, et
dans lequel H(s) a au moins un pôle à 0 Hz ou a au moins deux pôles à 0 Hz, et
dans lequel le bloc de fonction non linéaire (333') est configuré pour fournir en sortie un signal de rétroaction sous la forme de θfb = f(θo), où θfb est le signal de rétroaction, f() est une fonction non linéaire prédéfinie, et θo est la valeur de sortie.

9. Circuit de capteur (620 ; 720) selon la revendication 4,
dans lequel le premier circuit secondaire (660 ; 760) comprend ledit combineur (631; 731) suivi par ledit générateur de phase (627 ; 727),
et dans lequel le combineur (631 ; 731) est agencé pour recevoir et combiner ledit au moins un signal d'entrée (v1, v2) et ledit au moins un signal de rétroaction (fbi ; fbq),
et dans lequel le générateur de phase est configuré pour convertir le signal combiné en ledit signal de phase (θest).

10. Circuit de capteur (620 ; 720) selon la revendication 9,
dans lequel le deuxième circuit secondaire comprend un bloc de fonction non linéaire (670; 770) agencé pour recevoir et modifier ledit signal filtré (θcorr) en utilisant ladite fonction d'approximation linéaire par morceaux ;
et dans lequel le deuxième circuit secondaire (670 ; 770) comprend en outre un convertisseur de phase à I/Q (634 ; 734) configuré pour recevoir et convertir ce signal modifié en au moins deux signaux de composante ;
et dans lequel le signal de rétroaction (fbi ; fbq) est dérivé de ces signaux de composante.

11. Circuit de capteur (120 ; 520) selon l'une quelconque des revendications 6, 7, 8 ou 10,
dans lequel le circuit de traitement (127 ; 527) introduit une non-linéarité (NL2) ; et
dans lequel le bloc de fonction non linéaire (333 ; 383 ; 670 ; 770) est configuré pour réduire ou sensiblement éliminer au moins la non-linéarité (NL2) introduite par le circuit de traitement.

12. Circuit de capteur selon l'une quelconque des revendications précédentes,
dans lequel la pluralité de paramètres de la fonction d'approximation linéaire par morceaux sont stockés dans une mémoire non volatile du circuit de capteur.

13. Système de capteur de position (100 ; 500 ; 600 ; 700) comprenant :
- une source magnétique configurée pour générer un champ magnétique ayant une phase indicative d'une position mécanique (θmech) ; et
- un circuit de capteur (120 ; 520 ; 620 ; 720) selon l'une quelconque des revendications 3 à 11;
dans lequel le deuxième circuit secondaire est configuré pour réduire ou éliminer sensiblement au moins des erreurs, par exemple des harmoniques supérieures, liées à ou causées par des non-idéalités mécaniques de la source magnétique, situées à l'extérieur du circuit de capteur magnétique.

14. Système de capteur de position (100 ; 500 ; 600 ; 700) selon la revendication 13,
dans lequel la source magnétique est un aimant permanent qui est mobile par rapport au circuit de capteur magnétique (120 ; 520 ; 620 ; 720), ou inversement ;
et dans lequel le deuxième circuit secondaire est configuré pour réduire ou éliminer sensiblement au moins des erreurs, par exemple des harmoniques supérieures, liées aux aspects de montage mécanique, par exemple sélectionnés dans le groupe constitué par : un décalage de position, une inclinaison, une excentricité.

15. Système de capteur de position (100 ; 500 ; 600 ; 700) selon la revendication 13 ou 14,
comprenant une carte de circuit imprimé comprenant une pluralité de bobines ;
et comprenant une cible, qui est mobile par rapport à ladite pluralité de bobines ;
et comprenant ledit circuit de capteur magnétique ;
et dans lequel le deuxième circuit secondaire est configuré pour réduire ou éliminer sensiblement au moins des erreurs, par exemple des harmoniques supérieures, liées aux aspects de montage mécanique de la cible, par exemple sélectionnées dans le groupe constitué par : un décalage de position, une inclinaison, une excentricité, et/ou liées aux aspects de disposition de la pluralité de bobines.

16. Système de capteur de courant, comprenant :
- un conducteur de courant pour conduire un courant à mesurer ; et
- un circuit de capteur (120 ; 520) selon l'une quelconque des revendications 1 à 12, configuré pour mesurer un champ magnétique généré par le courant à mesurer.
